# EUROPEAN PATENT APPLICATION

(11) **EP 3 823 416 A1**
(43) Date of publication of application: **19.05.2021**
(21) Application number: 19834435.0
(22) Date of filing: 12.06.2019
(51) Int. Cl.: H05B 3/86, H05B 3/03, H05B 1/02

(54) **HEATING MODULE AND HEATING GLASS INCLUDING SAME**

(30) Priority: 11.07.2018 KR 20180080615
(71) Applicant: ITED INC., Daejeon 34054 (KR)
(72) Inventor: SEO, Jee-Hoon, Namyangju-Si, Gyeonggi-do 12055 (KR); YOO, Kum-Pyo, Anseong-si, Gyeonggi-do 17564 (KR)
(74) Representative: Ström & Gulliksson AB
(86) International application number: PCT/KR2019/007071
(87) International publication number: WO 2020/013459

(57) **Abstract**

A heating glass panel may include glass substrates and a heating module positioned between the glass substrates. The heating module may include a planar heating element, multiple busbars electrically connected to the planar heating element, and a power supply module that provides power selectively to the multiple busbars. The power supply module may supply power selectively to some of the busbars to thereby selectively generate heat in certain zones of the planar heating element.

## Description

### CROSS-REFERENCE TO RELATED APPLICATIONS

This application is a National Phase Application of PCT International Application No. PCT/KR2019/007071, which was filed on June 12, 2019, and which claims priority from Korean Patent Application No. 10-2018-0080615 filed on July 11, 2018. The disclosures of the above patent applications are incorporated herein by reference in their entirety.

### TECHNICAL FIELD

The present disclosure relates to a heating module and a heating glass panel, more particularly to a heating glass panel capable of generating heat from partitioned zones.

### BACKGROUND

Glass is prone to having frost or moisture, etc., forming on its surface, due to a temperature difference, etc., between the surface on one side and the surface on the other side. In such cases, it is possible to remove the frost or moisture, etc., by positioning a heating module for providing heat to the glass.

However, when transferring heat to a target having an increased area, it can be difficult to transfer heat uniformly.

Furthermore, when the target to which heat is to be transferred has to be heated with a constant amount of power, the user may find it difficult to effectively transfer heat to a desired portion.

### SUMMARY OF THE INVENTION

An objective of the present disclosure is to provide a heating module and a heating glass panel capable of selectively providing heat to a whole or a portion of a glass panel.

A heating glass panel according to an embodiment of the present disclosure can include a first glass substrate, a second glass substrate opposite the first glass substrate, and a heating module positioned between the first glass substrate and the second glass substrate.

The heating module can include a planar heating element, a first busbar superimposed over one side of the planar heating element and electrically connected with the planar heating element, a second busbar superimposed over the other side of the planar heating element and electrically connected with the planar heating element, a third busbar positioned between the first busbar and the second busbar and electrically connected with the planar heating element, a fourth busbar positioned between the first busbar and the second busbar and electrically connected with the planar heating element, a first power supply module electrically connected to a multiple number of busbars from among the first to fourth busbars, a second power supply module electrically connected to a multiple number of busbars from among the first to fourth busbars, and a control circuit configured to control the first power supply module and the second power supply module.

In an embodiment of the present disclosure, the planar heating element can include a multiple number of planar heating sub-elements that are separated from one another by a predetermined distance, and each of the multiple planar heating sub-elements can extend in a direction that intersects the directions in which the first to fourth busbars extend.

In an embodiment of the present disclosure, the first power supply module can be electrically connected to the first busbar, the second busbar, and the third busbar, while the second power supply module can be electrically connected to the second busbar and the fourth busbar.

In an embodiment of the present disclosure, the first power supply module can provide power to two busbars from among the first busbar, the second busbar, and the third busbar according to a first control signal received from the control circuit, while the second power supply module can provide power to the second busbar and the fourth busbar according to a second control signal received from the control circuit.

In an embodiment of the present disclosure, each of the first to fourth busbars can extend along a first direction, the third busbar and the fourth busbar can be positioned adjacent to the first busbar, and the third busbar can be superimposed over the fourth busbar in the first direction.

A heating module according to an embodiment of the present disclosure can further include a fifth busbar, which may be positioned between the second busbar and the third busbar and be electrically connected to the planar heating element, and a sixth busbar, which may be positioned between the second busbar and the fourth busbar and be electrically connected to the planar heating element.

In an embodiment of the present disclosure, the first power supply module can provide power to two busbars from among the first busbar, the second busbar, the third busbar, and the fifth busbar according to a first control signal received from the control circuit, and the second power supply module can provide power to the fourth busbar and the sixth busbar according to a second control signal received from the control circuit.

In an embodiment of the present disclosure, each of the first to sixth busbars can extend along a first direction, the third busbar can be superimposed over the fourth busbar in the first direction, and the fifth busbar can be superimposed over the sixth busbar in the first direction.

In an embodiment of the present disclosure, at least one of the first to fourth busbars can have a mesh shape.

In an embodiment of the present disclosure, the planar heating element can include silver nanowires.

In an embodiment of the present disclosure, the planar heating element can have a mesh shape.

A heating module according to an embodiment of the present disclosure can include a base member, a planar heating element disposed on the base member, a first busbar electrically connected to the planar heating element, a second busbar positioned separated from the first busbar and electrically connected to the planar heating element, a third busbar positioned between the first busbar and the second busbar and electrically connected to the planar heating element, a fourth busbar positioned between the first busbar and the second busbar and electrically connected to the planar heating element, and a power supply module configured to selectively provide power to at least two busbars from among the first to fourth busbars.

In an embodiment of the present disclosure, the planar heating element can include an upper surface, a lower surface opposite the upper surface, and a side surface connecting the upper surface and the lower surface, either one busbar from among the first busbar and second busbar can be positioned at the side surface, and the third busbar and the fourth busbar can be positioned on the upper surface.

In an embodiment of the present disclosure, the one busbar positioned at the side surface from among the first busbar and the second busbar can contain Ag paste or Ag ink.

A heating module according to an embodiment of the present disclosure can include a base member, a planar heating element disposed on the base member, a first busbar superimposed over a portion of one side of the planar heating element and electrically connected with the planar heating element, a second busbar superimposed over another portion of the one side of the planar heating element and electrically connected with the planar heating element, a third busbar superimposed over the other side of the planar heating element and electrically connected with the planar heating element, a first power supply module electrically connected to the first busbar and the third busbar, a second power supply module electrically connected to the second busbar and the third busbar, and a control circuit configured to control the first power supply module and the second power supply module.

According to an embodiment of the present disclosure, a heating module can be provided that is capable of effectively removing moisture or droplets formed on the surface of a glass panel.

Also, according to an embodiment of the present disclosure, a heating module can be provided that is capable of selectively heating only the portion of a glass panel desired by the user.

### BRIEF DESCRIPTION OF THE DRAWINGS

FIG. 1A is a perspective view of a heating glass panel according to an embodiment of the present disclosure.
FIG. 1B illustrates an example of the cross section of a heating glass panel according to an embodiment of the present disclosure.
FIG. 2 illustrates an example of a heating module according to an embodiment of the present disclosure.
FIG. 3A and FIG. 3B each illustrate an example of a possible cross section across line I-I' in FIG. 2.
FIG. 4 is a magnified view of a portion of the first busbar shown in FIG. 2.
FIG. 5A illustrates an example of a planar heating element according to an embodiment of the present disclosure.
FIG. 5B is a magnified view of portion AA in FIG. 5A.
FIG. 6 illustrates an example of a heating module according to an embodiment of the present disclosure.
FIG. 7 illustrates an example of a heating module according to an embodiment of the present disclosure.
FIG. 8 illustrates an example of a heating module according to an embodiment of the present disclosure.
FIG. 9 illustrates an example of a partial cross section across line II-II' in FIG. 8.
FIG. 10 illustrates an example of a heating module according to an embodiment of the present disclosure.
FIG. 11 illustrates an example of an automobile including a heating glass panel.
FIG. 12 illustrates an example of a window panel for a building including a heating glass panel.
FIG. 13 illustrates an example of an airplane including a heating glass panel.
FIG. 14 illustrates an example of a boat including a heating glass panel.

### DETAILED DESCRIPTION OF THE INVENTION

Certain embodiments of the present disclosure are described below with reference to the drawings.

In the drawings, the proportions and dimensions of the components have been exaggerated for a more effective depiction of the technical content. A phrase using the term "and/or" encompasses all of the one or more combinations that can be defined with the associated components.

It is to be understood that terms such as "including" or "having," etc., are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

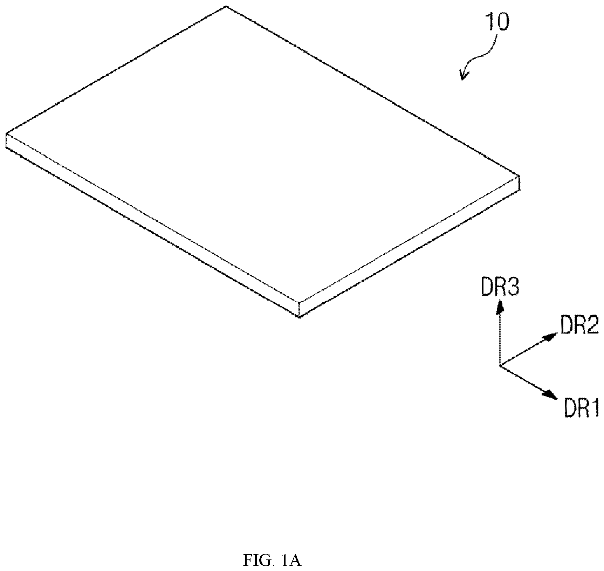

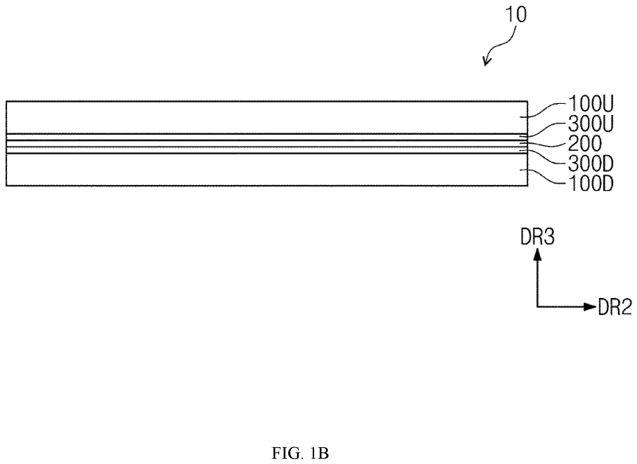

FIG. 1A is a perspective view of a heating glass panel 10 according to an embodiment of the present disclosure. FIG. 1B illustrates an example of the cross section of a heating glass panel 10 according to an embodiment of the present disclosure.

The heating glass panel 10 can include a first glass substrate 100D, a second glass substrate 100U, a heating module 200, a first attachment member 300D, and a second attachment member 300U.

The heating module 200 can be positioned between the first glass substrate 100D and the second glass substrate 100U.

The first attachment member 300D can be positioned between the first glass substrate 100D and the heating module 200 to join these together.

The second attachment member 300U can be positioned between the second glass substrate 100U and the heating module 200 to join these together.

The first attachment member 300D and the second attachment member 300U can each have a transparent property. For example, each of the first attachment member 300D and second attachment member 300U can include PVB (polyvinyl butyral).

The heating module 200 can generate heat, and the generated heat can be transferred to the first glass substrate 100D and the second glass substrate 100U. When the temperatures of the first glass substrate 100D and second glass substrate 100U are increased as a result, moisture formed on the surface of the heating glass panel 10 can be evaporated.

In another embodiment of the present disclosure, the first glass substrate 100D and the second glass substrate 100U can each be substituted by a transparent plastic such as a polycarbonate (PC), etc., for example. In such cases, the heating glass panel 10 can be understood as being a heating transparent panel.

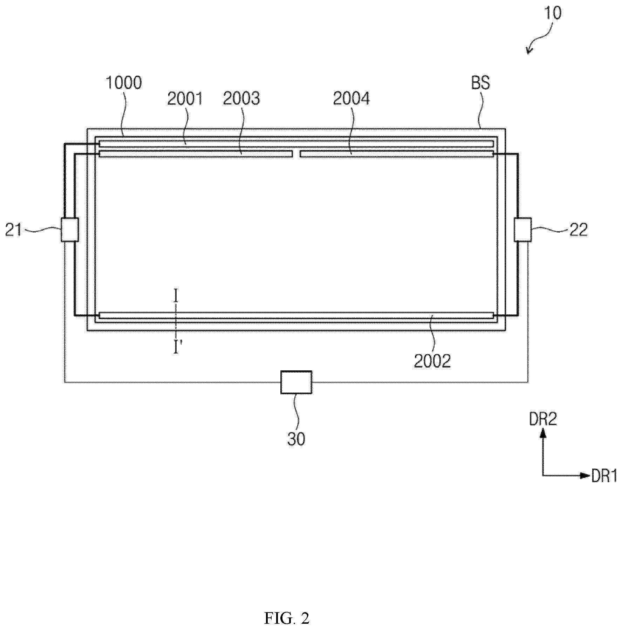

FIG. 2 illustrates an example of a heating module 200 according to an embodiment of the present disclosure.

In an embodiment of the present disclosure, the heating module 200 can include a base member BS, a planar heating element 1000, busbars 2001-2004, power supply modules 21, 22, and a control circuit 30.

The base member BS can be a film containing an organic or inorganic substance. However, the invention is not limited thus, and in other embodiments of the present disclosure, the base member BS can be any one of the glass substrates 100D, 100U (see FIG. 1) or any one of the attachment members 300D, 300U.

The planar heating element 1000 can be disposed on the base member BS. The planar heating element 1000 can be understood as a conductor that is electrically connected from one side to the other.

The planar heating element 1000 can include silver nanowires (AgNW). However, the invention is not limited thus, and the planar heating element 1000 can include ITO (indium tin oxide), IZO (indium zinc oxide), CNT (carbon nanotubes), or graphene.

The busbars 2001∼2004 can be electrically connected with the planar heating element 1000. The busbars 2001∼2004 can be formed as wiring or printed circuit boards that include metal.

The busbars 2001∼2004 can be conductors capable of transferring power provided from the power supply modules 21, 22 to the planar heating element 1000. The planar heating element 1000 can generate heat by converting the electrical power transferred from the busbars 2001∼2004 into thermal energy.

In an embodiment of the present disclosure, the busbars 2001∼2004 can be in direct contact with the planar heating element 1000. However, the invention is not limited thus, and a busbar 2001∼2004 can be electrically connected to the planar heating element 1000 by way of an anisotropic conductive film (ACF).

A first busbar 2001 can be positioned on one side of the planar heating element 1000. The first busbar 2001 can extend in a first direction DR1.

A second busbar 2002 can be positioned on the other side of the planar heating element 1000. The second busbar 2002 can extend along the first direction DR1. The second busbar 2002 be positioned separated from the first busbar 2001 in a second direction DR2.

A third busbar 2003 and a fourth busbar 2004 can be positioned between the first busbar 2001 and the second busbar 2002. The third busbar 2003 and the fourth busbar 2004 can each be positioned adjacent to the first busbar 2001. The third busbar 2003 and the fourth busbar 2004 can each extend along the first direction DR1. At least a portion of the third busbar 2003 can be superimposed over the fourth busbar 2004 in the first direction DR1.

A first power supply module 21 can be electrically connected to the first busbar 2001, the second busbar 2002, and the third busbar 2003.

A second power supply module 22 can be electrically connected to the second busbar 2002 and the fourth busbar 2004.

The control circuit 30 can be a circuit for controlling the first power supply module 21 and second power supply module 22. For example, the control circuit 30 can generate a first control signal for controlling the first power supply module 21 and can generate a second control signal for controlling the second power supply module 22.

The control circuit 30 can include a central processing unit (CPU) or a memory (volatile memory or non-volatile memory).

In response to the first control signal received from the control circuit 30, the first power supply module 21 can select two busbars from among the first busbar 2001, second busbar 2002, and third busbar 2003 and provide power to the selected busbars. Here, providing power can be understood as creating a potential difference between a busbar and another busbar to allow a flow of current.

For example, if the first power supply module 21 selects and provides power to the first busbar 2001 and the second busbar 2002, then the overall planar heating element 1000 can receive power and generate heat. That is, an area of about 80% or more of the total area of the planar heating element 1000 can generate heat.

For example, if the first power supply module 21 selects and provides power to the second busbar 2002 and the third busbar 2003, then only the left portion of the planar heating element 1000 can receive power and generate heat. That is, an area of about 79% or less, preferably 50% or less, of the total area of the planar heating element 1000 can generate heat.

In response to the second control signal received from the control circuit 30, the second power supply module 22 can provide power to the second busbar 2002 and the fourth busbar 2004.

For example, if the first power supply module 21 does not provide power and only the second power supply module 22 selects and provides power to the second busbar 2002 and the fourth busbar 2004, then only the right portion of the planar heating element 1000 can receive power and generate heat. That is, an area of about 79% or less, preferably 20% or more and 50% or less, of the total area of the planar heating element 1000 can generate heat.

In this way, the heating module 200 can have a first heating mode in which the planar heating element 1000 generates heat overall (or 80% or more of the total area generates heat) and a second heating mode in which only a portion of the planar heating element 1000 generates heat.

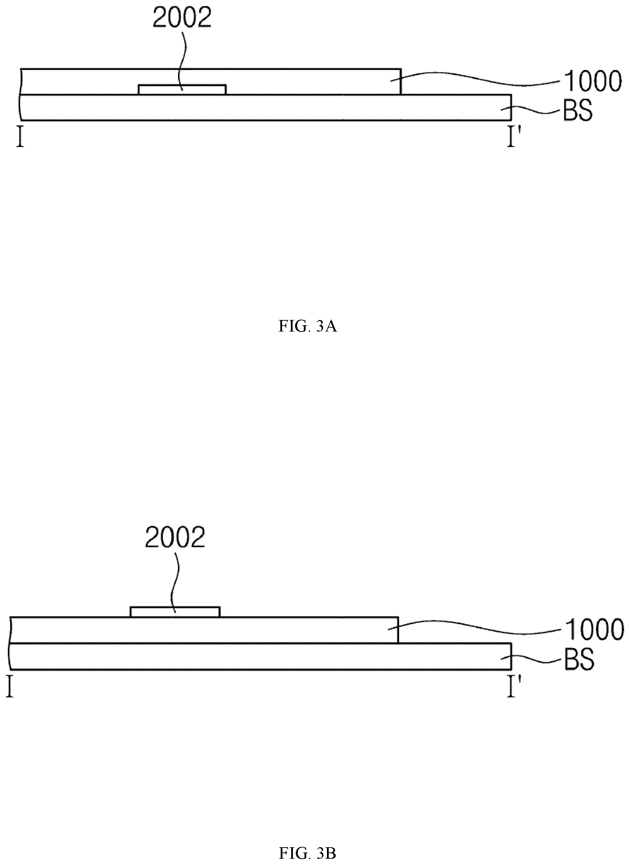

FIG. 3A and FIG. 3B each illustrate an example of a possible cross section across line I-I' in FIG. 2.

Referring to FIG. 3A, the second busbar 2002 can be disposed on the base member BS, and the planar heating element 1000 can be disposed on the base member BS to cover the second busbar 2002. Although it is not shown in the drawings, the planar heating element 1000 can likewise cover other busbars 2001, 2003, 2004.

Referring to FIG. 3B, the planar heating element 1000 can be disposed on the base member BS, and the second busbar 2002 can be disposed on the planar heating element 1000. Although it is not shown in the drawings, other busbars 2001, 2003, 2004 can likewise be disposed on the planar heating element 1000.

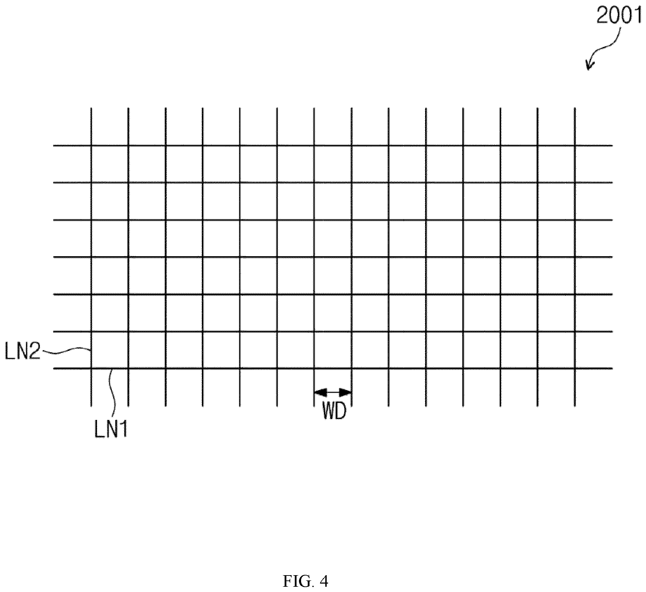

FIG. 4 is a magnified view of a portion of the first busbar 2001 shown in FIG. 2.

Referring to FIG. 4, a first busbar 2001 according to an embodiment of the present disclosure can have a mesh shape. Although it is not shown in the drawings, other busbars 2002∼2004 can also have mesh shapes similar to that of the first busbar 2001.

As the busbars 2001∼2004 have mesh shapes, the busbars 2001∼2004 can be made less noticeable to the human eye.

However, the shapes of the busbars 2001∼2004 are not limited thus, and in other embodiments of the present disclosure, the busbars 2001∼2004 can include metal wires or metal films.

The first busbar 2001 can include a multiple number of first lines LN1 and a multiple number of second lines LN2 that intersect with the first lines LN1. For example, the first lines LN1 and second lines LN2 can each have a line width that is greater than or equal to 1 µm and smaller than or equal to 3 µm, preferably a line width of about 2 µm.

From among the first lines LN1 and second lines LN2, the distance WD between two adjacent lines (hereinafter referred to as 'separated distance') can be greater than or equal to 20 µm and smaller than or equal to 40 µm. If the separated distance WD is smaller than 20 µm, then visibility may be worsened as the first busbars 2001 become noticeable to the human eye, and if the separated distance WD is greater than 40 µm, then the ability of the first busbar 2001 to transfer heat to another object can be lowered.

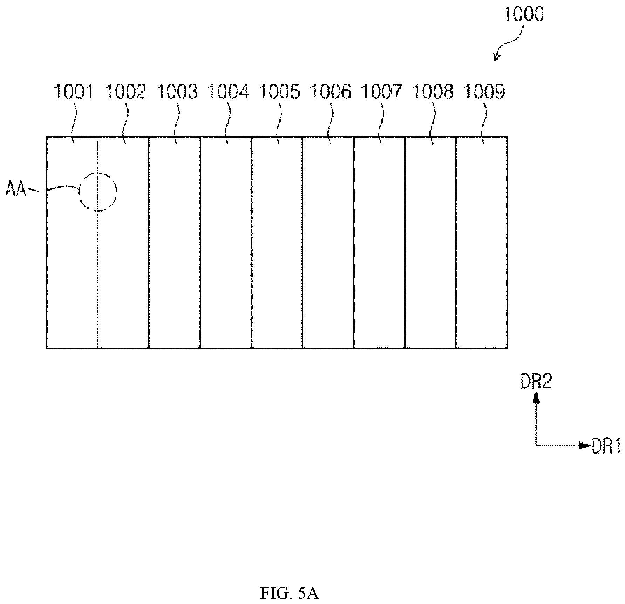

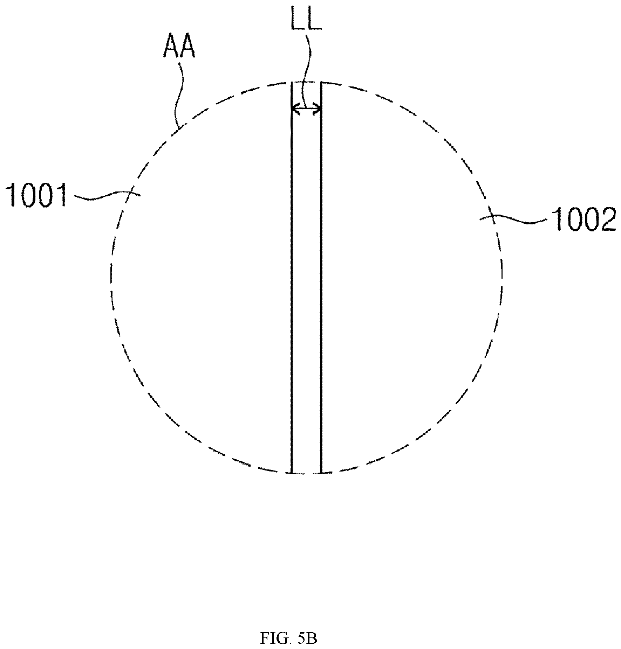

FIG. 5A illustrates an example of a planar heating element 1000 according to an embodiment of the present disclosure. FIG. 5B is a magnified view of portion AA in FIG. 5A.

The planar heating element 1000 can include multiple planar heating sub-elements 1001∼1009. While FIG. 5A illustrates an example having nine planar heating sub-elements 1001-1009, the number of planar heating sub-elements 1001∼1009 is not limited thus.

In an embodiment of the present disclosure, each of the planar heating sub-elements 1001∼1009 can have substantially the same sheet resistance value. This is so that, when the planar heating sub-elements 1001∼1009 are supplied with power, heat may be generated uniformly.

Two adjacent planar heating sub-elements 1001∼1009 can be separated by a predetermined distance LL (hereinafter referred to as 'pattern distance'). The pattern distance LL can be 100 µm or greater. If the pattern distance LL is smaller than 100 µm, visibility may be worsened due to optical properties such as light scattering when light passes through.

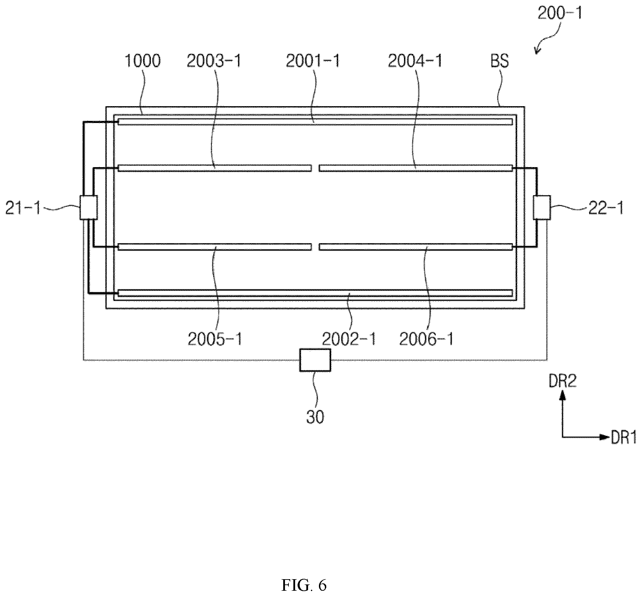

FIG. 6 illustrates an example of a heating module 200-1 according to an embodiment of the present disclosure.

In an embodiment of the present disclosure, the heating module 200-1 can include a base member BS, a planar heating element 1000, busbars 2001-1∼2006-1, power supply modules 21-1, 22-1, and a control circuit 30.

The busbars 2001-1∼2006-1 can be electrically connected with the planar heating element 1000. The busbars 2001-1∼2006-1 can be formed as wiring or printed circuit boards that include metal.

The busbars 2001-1∼2006-1 can be conductors capable of transferring power provided from the power supply modules 21-1, 22-1 to the planar heating element 1000. The planar heating element 1000 can generate heat by converting the electrical power transferred from the busbars 2001-1∼2006-1 into thermal energy.

The first busbar 2001-1 can be positioned at one side of the planar heating element 1000. The first busbar 2001-1 can extend along a first direction DR1.

The second busbar 2002-1 can be positioned at the other side of the planar heating element 1000. The second busbar 2002 can extend along the first direction DR1. The second busbar 2002-1 can be positioned separated from the first busbar 2001-1 in a second direction DR2.

The third to sixth busbars 2003-1∼2006-1 can be positioned between the first busbar 2001-1 and the second busbar 2002-1.

More specifically, the third busbar 2003-1 can be positioned between the first busbar 2001-1 and the fifth busbar 2005-1. The fourth busbar 2004-1 can be positioned between the first busbar 2001-1 and the sixth busbar 2006-1.

The third busbar 2003-1 and the fourth busbar 2004-1 can each extend along the first direction DR1. At least a portion of the third busbar 2003-1 can be superimposed over the fourth busbar 2004-1 in the first direction DR1.

The fifth busbar 2005-1 can be positioned between the second busbar 2002-1 and the third busbar 2003-1. The sixth busbar 2006-1 can be positioned between the second busbar 2002-1 and the fourth busbar 2004-1.

The fifth busbar 2005-1 and the sixth busbar 2006-1 can each extend along the first direction DR1. At least a portion of the fifth busbar 2005-1 can be superimposed over the sixth busbar 2006-1 in the first direction DR1.

A first power supply module 21-1 can be electrically connected to the first busbar 2001-1, second busbar 2002-1, third busbar 2003-1, and fifth busbar 2005-1.

A second power supply module 22-1 can be electrically connected to the fourth busbar 2004-1 and the sixth busbar 2006-1.

In response to a first control signal received from the control circuit 30, the first power supply module 21-1 can select two busbars from among the first busbar 2001-1, second busbar 2002-1, third busbar 2003-1, and fifth busbar 2005-1 and provide power to the selected busbars.

In response to a second control signal received from the control circuit 30, the second power supply module 22-1 can provide power to the fourth busbar 2004-1 and the sixth busbar 2006-1.

The descriptions of the remaining features are substantially the same as the descriptions provided with reference to FIG. 2 to FIG. 5, and as such, redundant descriptions are omitted.

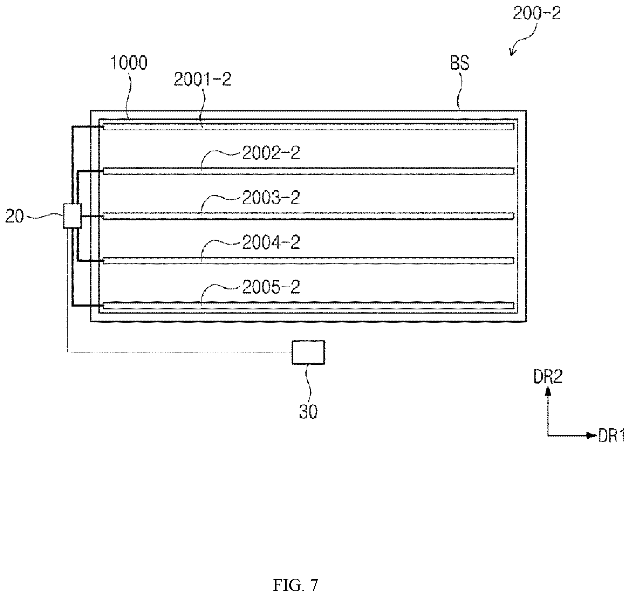

FIG. 7 illustrates an example of a heating module 200-2 according to an embodiment of the present disclosure.

In an embodiment of the present disclosure, the heating module 200-2 can include a base member BS, a planar heating element 1000, busbars 2001-2∼2005-2, a power supply module 20, and a control circuit 30.

The busbars 2001-2∼2005-2 can be electrically connected with the planar heating element 1000. The busbars 2001-2∼2005-2 can be formed as wiring or printed circuit boards that include metal.

The busbars 2001-2∼2005-2 can be conductors capable of transferring power provided from the power supply module 20 to the planar heating element 1000. The planar heating element 1000 can generate heat by converting the electrical power transferred from the busbars 2001-2∼2005-2 into thermal energy.

The busbars 2001-2∼2005-2 can be arranged in a row, superimposed over the planar heating element 1000. Each of the busbars 2001-2∼2005-2 can extend along the first direction DR1.

The power supply module 20 can be electrically connected to the busbars 2001-2-2005-2.

In response to a control signal received from the control circuit 30, the power supply module 20 can select two busbars from among the busbars 2001-2∼2005-2 and provide power to the selected busbars.

The descriptions of the remaining features are substantially the same as the descriptions provided with reference to FIG. 2 to FIG. 5, and as such, redundant descriptions are omitted.

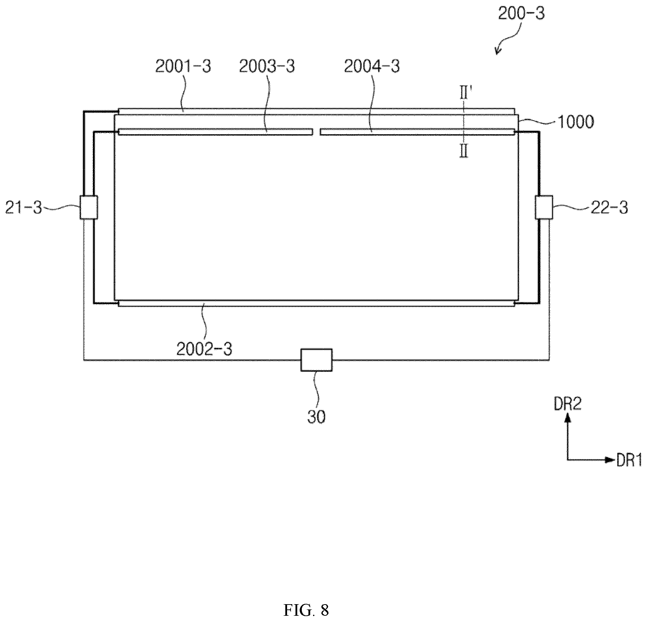

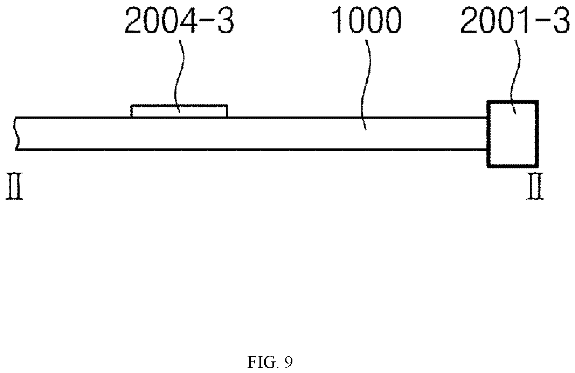

FIG. 8 illustrates an example of a heating module 200-3 according to an embodiment of the present disclosure. FIG. 9 illustrates an example of a partial cross section across line II-II' in FIG. 8. For convenience, the base member BS (see FIG. 2) is not shown in FIG. 8 and FIG. 9.

In an embodiment of the present disclosure, the heating module 200-3 can include a planar heating element 1000, busbars 2001-3∼2004-3, power supply modules 21-3, 22-3, and a control circuit 30.

The planar heating element 1000 can include an upper surface, a lower surface opposite the upper surface, and side surfaces connecting the upper surface and lower surface.

A first busbar 2001-3 can be positioned at a side surface of the planar heating element 1000, and a fourth busbar 2004-3 can be positioned at the upper surface of the planar heating element 1000.

Although it is not shown in FIG. 9, a second busbar 2002-3 can likewise be positioned at a side surface of the planar heating element 1000, and a third busbar 2003-3 can be positioned at the upper surface of the planar heating element 1000.

In an embodiment of the present disclosure, each of the first busbar 2001-3 and the second busbar 2002-3 can contain Ag paste, Ag ink, high-density AgNW, or metal nanopowder paste.

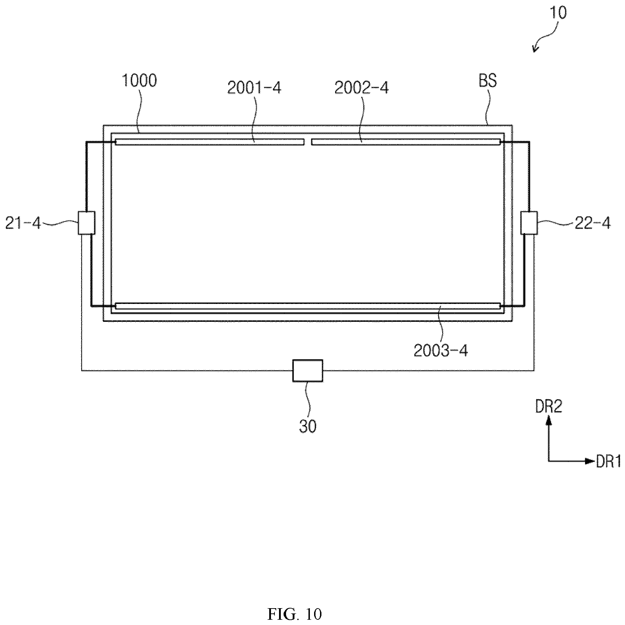

FIG. 10 illustrates an example of a heating module 200-4 according to an embodiment of the present disclosure.

In an embodiment of the present disclosure, the heating module 200-4 can include a base member BS, a planar heating element 1000, busbars 2001-4∼2003-4, power supply modules 21-4, 22-4, and a control circuit 30.

The busbars 2001-4∼2003-4 can be electrically connected with the planar heating element 1000. The busbars 2001-4∼2003-4 can be formed as wiring or printed circuit boards that include metal.

The busbars 2001-4∼2003-4 can be conductors capable of transferring power provided from the power supply modules 21-4, 22-4 to the planar heating element 1000. The planar heating element 1000 can generate heat by converting the electrical power transferred from the busbars 2001-4∼2003-4 into thermal energy.

The busbars 2001-4∼2003-4 can be arranged in a row, superimposed over the planar heating element 1000. Each of the busbars 2001-4∼2003-4 can extend along the first direction DR1.

A first busbar 2001-4 can be positioned superimposed over a portion of one side of the planar heating element 1000, and a second busbar 2002-4 can be positioned superimposed over another portion one the one side of the planar heating element 1000. A third busbar 2003-4 can be positioned superimposed over the other side of the planar heating element 1000.

A first power supply module 21-4 can provide power to the first busbar 2001-4 and the third busbar 2003-4. A second power supply module 22-4 can provide power to the second busbar 2002-4 and the third busbar 2003-4.

In response to control signals received from the control circuit 30, the power supply modules 21-4, 22-4 can provide power to the busbars 2001-4∼2003-4.

The descriptions of the remaining features are substantially the same as the descriptions provided with reference to FIG. 2 to FIG. 5, and as such, redundant descriptions are omitted.

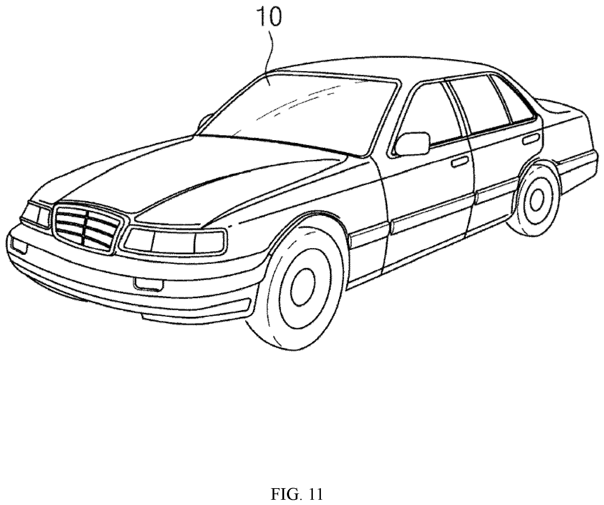

FIG. 11 illustrates an example of an automobile including a heating glass panel 10.

As illustrated in FIG. 11, by applying a heating glass panel 10 according to an embodiment of the present disclosure to the front or rear windshield of an automobile, it is possible to provide the driver with the field of vision needed for driving regardless of weather conditions. More specifically, with a heating glass panel 10 according to an embodiment of the present disclosure applied as above, the driver of the automobile can select the zone where ensuring a clear field of vision is necessary, at which the heating can be focused on the selected zone, and a clear field of vision can be provided efficiently.

While FIG. 11 illustrates an example in which the heating glass panel 10 is applied to the front windshield of the automobile, the invention is not limited thus, and a heating glass panel 10 according to an embodiment of the present disclosure can be applied to any glass panel of an automobile.

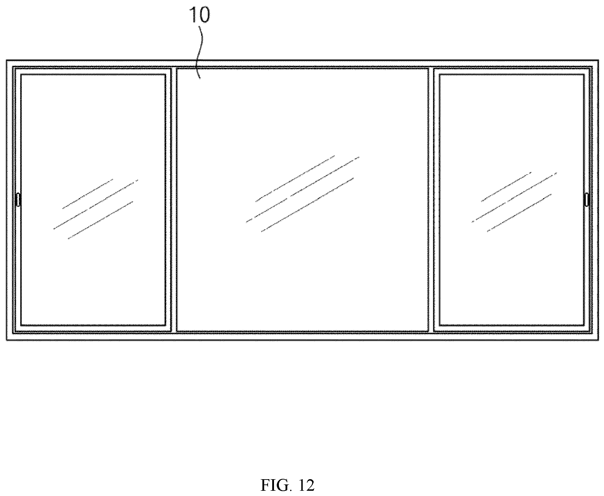

FIG. 12 illustrates an example of a window panel for a building including a heating glass panel 10.

As illustrated in FIG. 12, by applying a heating glass panel 10 according to an embodiment of the present disclosure to a window panel for a building, it is possible to provide the occupants of the building space with a field of vision to the outside regardless of weather conditions.

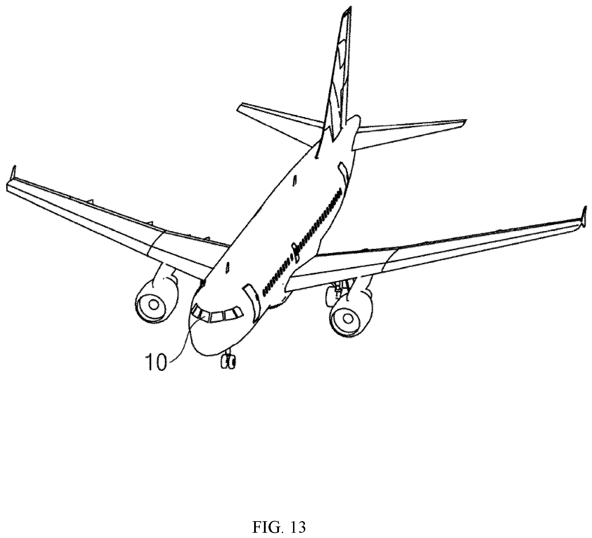

FIG. 13 illustrates an example of an airplane including a heating glass panel 10.

As illustrated in FIG. 13, by applying a heating glass panel 10 according to an embodiment of the present disclosure to an airplane, it is possible to provide the passengers of the airplane with a field of vision to the outside regardless of weather conditions.

The heating glass panel 10 illustrated in FIG. 13 can be substituted with a heating transparent panel, and descriptions regarding the heating transparent panel are as provided above.

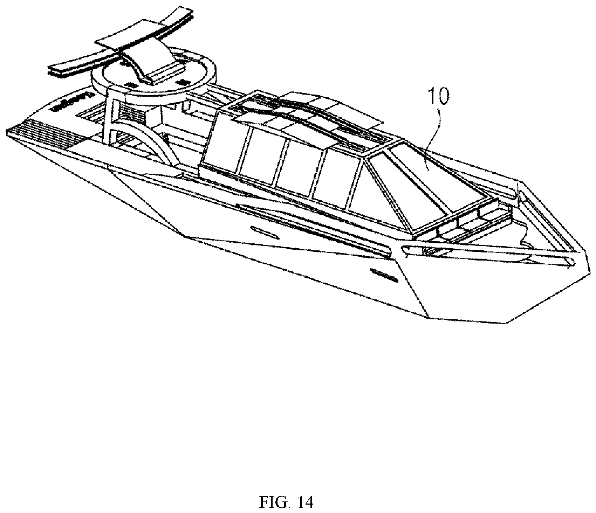

FIG. 14 illustrates an example of a boat including a heating glass panel 10.

As illustrated in FIG. 14, by applying a heating glass panel 10 according to an embodiment of the present disclosure to a boat, it is possible to provide the passengers of the boat with a field of vision to the outside regardless of weather conditions.

The heating glass panel 10 illustrated in FIG. 14 can be substituted with a heating transparent panel, and descriptions regarding the heating transparent panel are as provided above.

While the spirit of the invention has been described above with reference to certain embodiments, it is to be appreciated that the person skilled in the art can change or modify the invention in various ways without departing from the scope and spirit of the invention. Moreover, the embodiments disclosed herein are not to limit the spirit of the invention, and all technical concepts within the scope of the claims below as well as the range of equivalency are to be interpreted as being encompassed within the scope of rights of the present invention.

### INDUSTRIAL APPLICABILITY

Applying heat uniformly over a glass panel by using a planar heating element can effectively remove frost or moisture, etc., formed on the glass panel and thus increase the utility of the glass panel. Therefore, the present disclosure, which enables a uniform heating of a glass panel by using a planar heating element, has a high potential for industrial applicability.

## Claims

1. A heating module comprising:
a base member;
a planar heating element disposed on the base member;
a first busbar superimposed over one side of the planar heating element and configured to touch the planar heating element;
a second busbar superimposed over the other side of the planar heating element and configured to touch the planar heating element;
a third busbar positioned between the first busbar and the second busbar, the third busbar configured to touch the planar heating element but not touch the first busbar and the second busbar;
a fourth busbar positioned between the first busbar and the second busbar, the fourth busbar configured to touch the planar heating element but not touch the first busbar, the second busbar, and the third busbar;
a first power supply module electrically connected to a plurality of busbars from among the first to fourth busbars;
a second power supply module electrically connected to a plurality of busbars from among the first to fourth busbars; and
a control circuit configured to control the first power supply module and the second power supply module.

2. The heating module of claim 1, wherein the planar heating element comprises a plurality of planar heating sub-elements separated from one another by a predetermined distance, and
each of the plurality of planar heating sub-elements extends in a direction intersecting an extending direction of the first to the fourth busbars.

3. The heating module of claim 1, wherein the first power supply module is electrically connected to the first busbar, the second busbar, and the third busbar, and
the second power supply module is electrically connected to the second busbar and the fourth busbar.

4. The heating module of claim 3, wherein the first power supply module provides power to two busbars of the first busbar, the second busbar, and the third busbar according to a first control signal received from the control circuit, and
the second power supply module provides power to the second busbar and the fourth busbar according to a second control signal received from the control circuit.

5. The heating module of claim 4, wherein each of the first to fourth busbars extends along a first direction,
the third busbar and the fourth busbar are positioned adjacent to the first busbar, and
the third busbar is superimposed over the fourth busbar in the first direction.

6. The heating module of claim 1, further comprising:
a fifth busbar positioned between the second busbar and the third busbar and electrically connected to the planar heating element; and
a sixth busbar positioned between the second busbar and the fourth busbar and electrically connected to the planar heating element; and

7. The heating module of claim 6, wherein the first power supply module provides power to two busbars of the first busbar, the second busbar, the third busbar, and the fifth busbar according to a first control signal received from the control circuit, and
the second power supply module provides power to the fourth busbar and the sixth busbar according to a second control signal received from the control circuit.

8. The heating module of claim 7, wherein each of the first to sixth busbars extends along a first direction,
the third busbar is superimposed over the fourth busbar in the first direction, and
the fifth busbar is superimposed over the sixth busbar in the first direction.

9. The heating module of claim 1, wherein at least one of the first to fourth busbars has a mesh shape.

10. The heating module of claim 1, wherein the planar heating element comprises silver nanowires.

11. The heating module of claim 1, wherein the planar heating element has a mesh shape.

12. A heating module comprising:
a base member;
a planar heating element disposed on the base member;
a first busbar configured to touch the planar heating element;
a second busbar positioned separated from the first busbar and configured to touch the planar heating element;
a third busbar positioned between the first busbar and the second busbar, the third busbar configured to touch the planar heating element but not touch the first busbar and the second busbar;
a fourth busbar positioned between the first busbar and the second busbar, the fourth busbar configured to touch the planar heating element but not touch the first busbar, the second busbar, and the third busbar; and
a power supply module configured to selectively provide power to at least two busbars from among the first to fourth busbars.

13. The heating module of claim 12, wherein the planar heating element comprises an upper surface, a lower surface opposite the upper surface, and a side surface connecting the upper surface and the lower surface,
either one busbar from among the first busbar and second busbar is positioned at the side surface, and
the third busbar and the fourth busbar are positioned on the upper surface.

14. The heating module of claim 13, wherein the one busbar positioned at the side surface from among the first busbar and the second busbar contains Ag paste or Ag ink.

15. The heating module of claim 14, wherein the third busbar and the fourth busbar have mesh shapes.

16. The heating module of claim 13, wherein the power supply module comprises:
a first power supply module configured to selectively provide power to two busbars from among the first busbar, the second busbar, and the third busbar; and
a second power supply module configured to provide power to the second busbar and the fourth busbar.

17. The heating module of claim 12, comprising:
a first heating mode in which an area heated by the power provided by the power supply module is greater than or equal to 80% and smaller than or equal to 100% of an area of the planar heating element; and
a second heating mode in which an area heated by the power provided by the power supply module is greater than or equal to 20% and smaller than or equal to 79% of an area of the planar heating element.

18. A heating glass panel comprising:
a first glass substrate;
a second glass substrate opposite the first glass substrate; and
a heating module positioned between the first glass substrate and the second glass substrate, wherein the heating module comprises:
a planar heating element;
a first busbar superimposed over one side of the planar heating element and configured to touch the planar heating element;
a second busbar superimposed over the other side of the planar heating element and configured to touch the planar heating element but not touch the first busbar;
a third busbar positioned between the first busbar and the second busbar, the third busbar configured to touch the planar heating element but not touch the first busbar and the second busbar;
a fourth busbar positioned between the first busbar and the second busbar, the fourth busbar configured to touch the planar heating element but not touch the first busbar, the second busbar, and the third busbar;
a first power supply module electrically connected to a plurality of busbars from among the first to fourth busbars;
a second power supply module electrically connected to a plurality of busbars from among the first to fourth busbars; and
a control circuit configured to control the first power supply module and the second power supply module.

19. The heating glass panel of claim 18, wherein the planar heating element comprises a plurality of planar heating sub-elements separated from one another by a predetermined distance, and
each of the plurality of planar heating sub-elements extends in a direction intersecting an extending direction of the first to the fourth busbars.

20. A heating module comprising:
a base member;
a planar heating element disposed on the base member;
a first busbar superimposed over a portion of one side of the planar heating element and configured to touch the planar heating element;
a second busbar superimposed over another portion of the one side of the planar heating element and configured to touch the planar heating element but not touch the first busbar;
a third busbar superimposed over the other side of the planar heating element and configured to touch the planar heating element but not touch the first busbar and the second busbar;
a first power supply module electrically connected to the first busbar and the third busbar;
a second power supply module electrically connected to the second busbar and the third busbar; and
a control circuit configured to control the first power supply module and the second power supply module.
